# EUROPÄISCHE PATENTSCHRIFT

(11) **EP 0 438 094 B1**
(45) Veröffentlichungstag und Bekanntmachung des Hinweises auf die Patenterteilung: **28.08.1996**
(21) Anmeldenummer: 91100345.7
(22) Anmeldetag: 12.01.1991
(51) Int. Cl.: H04M 1/72

(54) **Vorrichtung zum Betreiben von schnurlosen Telefonen**
Device for operating cordless telephones
Dispositif pour l'utilisation de téléphones sans fil

(30) Priorität: 13.01.1990 DE 4000859
(43) Veröffentlichungstag der Anmeldung: 24.07.1991
(73) Patentinhaber: HAGENUK GMBH, D-24118 Kiel (DE)
(72) Erfinder: Schenk, Jörg, W-2300 Kiel 14 (DE); Voss, Klaus, W-2300 Kiel (DE)
(74) Vertreter: Hansmann, Dierk, Dipl.-Ing.

(56) Entgegenhaltungen:
- EP-A- 0 342 707
- DE-A- 3 520 441
- DE-A- 3 738 829
- JAPAN TELECOMMUNICATION REVIEW Bd. 12, Nr. 2, April 1970, TOKYO JP Seiten 113 - 121 TORU UEHARA ET AL. 'Wireless Telephone System at EXPO'70'

## Beschreibung

Vorrichtung zum gleichzeitigen Betreiben von mindestens zwei schnurlosen Telefonen, bei der zugeordnete Basisstationen an eine gemeinsame Antenne angeschlossen sind und eine mit der Antenne verbundene Antennenweiche vorgesehen ist, und bei der im Bereich der Antennenweiche ein ein Empfangssignal von einem Sendesignal trennender Antennenduplexer vorgesehen ist, der Antennenduplexer einerseits mit einer das Empfangssignal in Einzelempfangssignale auftrennenden Eingangsweiche und andererseits mit einer das Sendesignal aus Einzelsendesignalen kombinierenden Ausgangsweiche verbunden ist, die Eingangsweiche und die Ausgangsweiche jeweils mit mindestens einem Hochfrequenzteil verschaltet sind und bei der im Bereich der Eingangsweiche mindestens ein das Eingangssignal verstärkender Vorverstärker sowie mindestens ein das Eingangssignal in Einzeleingangssignale aufteilender Leistungsteiler angeordnet ist.

Werden in enger räumlicher Nähe mehrere schnurlose Telefone betrieben, so ist durch die benachbarte Anordnung von mehreren Sendern und Empfängern eine gegenseitige Beeinflussung zu befürchten, die die Qualität der Signalübertragung durch Störungsüberlagerung beeinträchtigt. Die Störungen resultieren dabei nicht nur aus dem Empfang eines nicht für eine bestimmte Antenne vorgesehenen Signals, sondern auch aus der gegenseitigen Beeinflussung der Sender und der Antennen jeweils untereinander.

Eine Vorrichtung zum Betreiben von schnurlosen Telefonen ist aus der DE-OS 37 38 829 bekannt. Mit der Vorrichtung gemäß dieser Druckschrift ist es möglich, mehrere Handapparate an eine Basisstation anzuschließen. Die Erkennung von zugeordneten Handapparaten erfolgt mit Hilfe von Teilnehmercodes, die beim Empfang eines Signales ausgewertet und mit im Bereich eines elektronischen Speichers bevorrateten zulässigen Codes verglichen werden. Mit der Antennenweiche ist es möglich, mehrere Basisstationen an eine gemeinsame Antenne anzuschließen. Es erfolgt jedoch keine Auftrennung von Sende- und Empfangssignalen, die eine jeweils angepaßte elektronische Verarbeitung ermöglichen würde.

Gemäß der DE-OS 35 20 441 ist es bekannt, eine Basisstation mit einer Vielzahl von Handapparaten zu verbinden und eine Auswahl von zulässigen Verbindungen durch die Auswertung von speziellen Codes vorzunehmen, die einem Nutzsignal vorangeschickt werden. Die Auswertung der Codes erfolgt digital und nach dem Empfang eines zulässigen Codes wird eine Funkverbindung hergestellt sowie eine Signalübertragung für die weiteren angeschlossenen Handapparate gesperrt. Es ist also mit Hilfe dieser Vorrichtung nicht möglich, gleichzeitig Verbindungen zwischen mehreren Basisstationen und Hand-apparaten herzustellen.

Aus der EP-A-0 342 707 ist es bekannt, eine Vorrichtung zum gleichzeitigen Betreiben von mindestens zwei schnurlosen Telefonen mit zugeordneten Basisstationen an eine gemeinsame Antenne anzuschließen. Es ist eine mit der Antenne verbundene Antennenweiche vorgesehen, die einen das Empfangssignal vom Sendesignal trennenden Antennenduplexer aufweist. Der Antennenduplexer ist mit einer Eingangsweiche versehen, die das Empfangssignal in Einzelempfangssignale auftrennt. Darüber hinaus ist eine das Sendesignal aus Einzelsendesignalen kombinierende Ausgangsweiche vorhanden. Für das Eingangssignal sind Vorverstärker sowie Leistungsteiler zur Aufteilung in Einzeleingangssignale vorhanden.

In der JAPAN TELECOMMUNICATION REVIEW, Bd. 12, Nr. 2, April 1970, Tokyo, JP; Seiten 113 - 121, Toru Uehara et al.: "Wireless Telephone System at Expo'70" wird eine Vorrichtung beschrieben, bei der ein schnurloses Telefonsystem mit separaten Empfangsantennen und Sendeantennen versehen ist. Im Bereich einer Basisstation sind eine Vielzahl von Empfängern und Sendern angeordnet. Die Ausgänge der Sender werden von hybriden Schaltkreisen zusammengefaßt.

Aufgabe der vorliegenden Erfindung ist es, eine Vorrichtung der einleitend genannten Art so zu konstruieren, daß in geringem räumlichen Abstand mehrere drahtlose Telefone ohne Beeinträchtigung der Übertragungsqualität betrieben werden können.

Diese Aufgabe wird erfindungsgemäß dadurch gelöst, daß eine gleiche Anzahl von Handapparaten einerseits und Basisstationen andererseits vorgesehen ist, daß jedem der Telefone eine Basisstation zugeordnet ist und daß im Bereich der Ausgangsweiche Einzelausgangssignale verstärkende und über Filter einem Ausgangskoppler zuleitende Vorverstärker angeordnet sind und daß zur Signalübertragung ein Frequenzmultiplex/-Frequenzduplexverfahren verwendet ist.

Die Verbindung der Basisstationen mit einer gemeinsamen Antenne vermeidet eine Störung der Signalübertragung durch sich gegenseitig beeinflussende Einzelantennen. Da ein unmittelbarer Anschluß der Basisstationen an eine gemeinsame Antenne zu einer unerwünschten Verkopplung der Basisstationen und damit zu Störungen der zu übertragenden Signale führen würde, sind zwischen der Antenne und den Basisstationen Duplexer und Filter angeordnet. Durch den Antennenduplexer und die Basisduplexer wird eine ausreichende Trennung von Sende- und Empfangssignalen gewährleistet und die Eingangsweiche leitet den von einem bestimmten Handapparat des drahtlosen Telefones ausgesandten Signalanteil der zugeordneten Basisstation zu.

Die Ausgangsweiche kombiniert von den einzelnen Basisstationen generierte Einzelsignale zu einem von der Antenne zu übertragenden Gesamtsignal unter Vermeidung einer gegenseitigen Beeinflussung der Einzelsignale. Im Bereich der Eingangsweiche ist mindestens ein das Eingangssignal verstärkender Vorverstärker und mindestens ein das Eingangssignal in Einzeleingangssignale aufteilender Leistungsteiler angeordnet. Diese Bauelemente gewährleisten eine Auftrennung der Signalanteile unter Vermeidung einer Signalschwächung.

Gemäß einer bevorzugten Ausführungsform der Erfindung sind die Bauelemente im Bereich der Eingangsweiche so angeordnet, daß jeweils ein Vorverstärker und ein Leistungsteiler ein das Eingangssignal kaskaden förmig aufteilendes Kaskadenelement ausbilden. Diese kaskadierte Anordnung, bei dem jedes Element der Kaskade vorzugsweise ein Summensignal in zwei Teilsignale aufteilt, ermöglicht einen kompakten Aufbau der Eingangsweiche unter Verwendung einer geringen Bauelementeanzahl.

Gemäß einer anderen bevorzugten Ausführungsform der Erfindung sind im Bereich der Ausgangsweiche Einzelausgangssignale verstärkende und über Filter einen Ausgangskoppler zu leitende Vorverstärker angeordnet. Durch das Zusammenwirken der Vorverstärker und der Filter wird unter Vermeidung einer Signal schwächung eine gegenseitige Beeinflussung der Einzelausgangssignale und damit eine Beeinträchtigung der Übertragungsqualität vermieden. Die Filter vermeiden darüber hinaus eine Übertragung des von einer Basisstation generierten Einzelausgangssignals über den Ausgangskoppler auf eine andere Basisstation.

Weitere Einzelheiten der vorliegenden Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

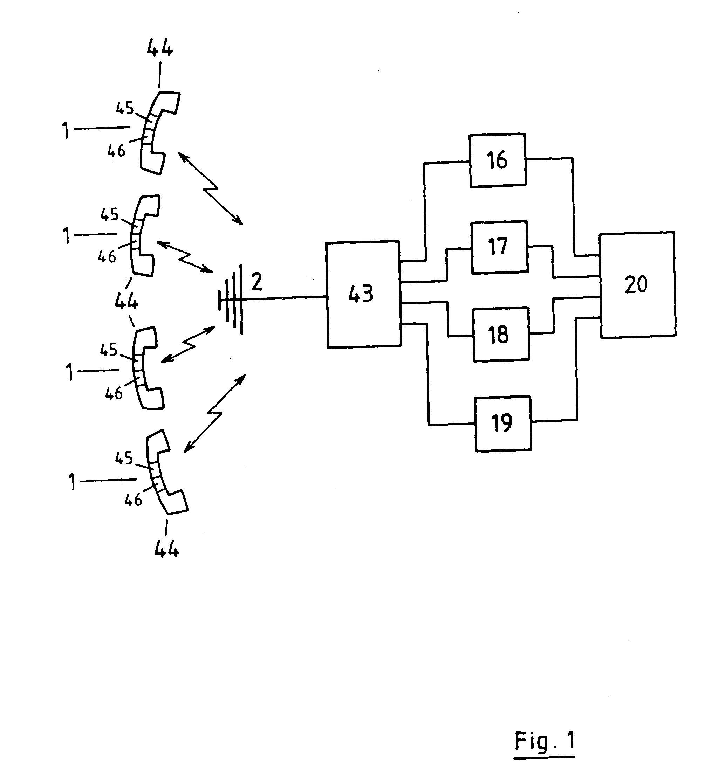

- Fig. 1: eine prinzipielle Darstellung einer Vorrichtung zum Betrieb von vier schnurlosen Telefonen mit einer gemeinsamen Antenne,

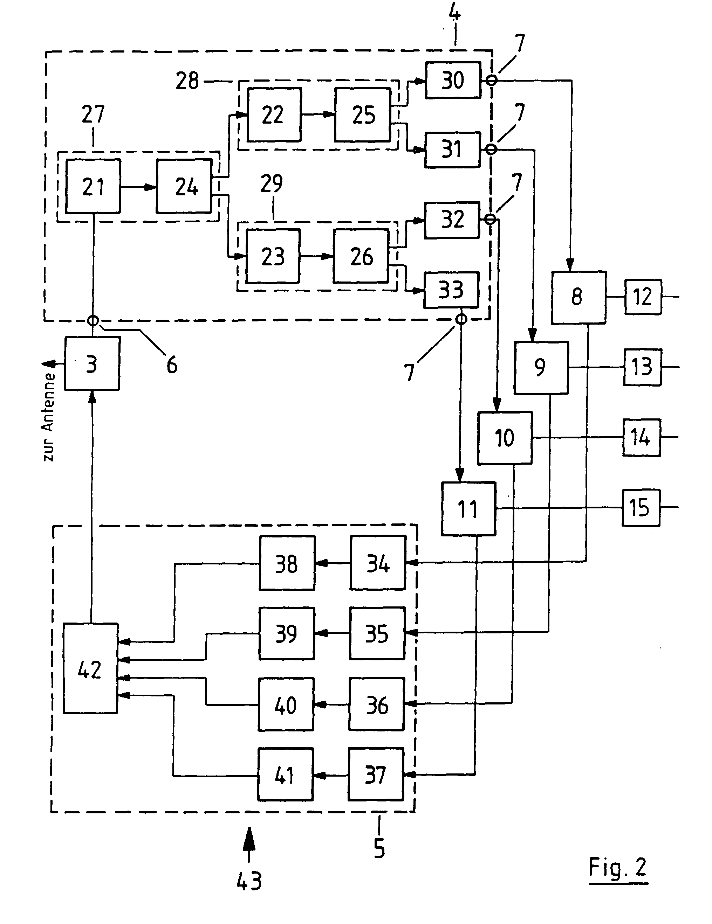

- Fig. 2: eine Blockschaltbilddarstellung eines zwischen der Antenne und den Basisstationen angeordneten Vermittlungselementes.

Eine Vorrichtung zum Betreiben von mindestens zwei schnurlosen Telefonen 1 mit einer gemeinsamen Antenne 2 besteht im wesentlichen aus einem mit der Antenne 2 verbundenen Antennenduplexer 3, der ein von der Antenne 2 aufgefangenes Empfangssignal einer Eingangsweiche 4 zuführt und ein von einer Ausgangsweiche 5 generiertes Ausgangssignal unter Vermeidung einer Rückkopplung auf das Eingangssignal der Antenne 2 zuleitet. Die Eingangsweiche 4 weist einen Eingang 6 und mehrere Ausgänge 7 auf, deren Anzahl der Anzahl der betriebenen schnurlosen Telefone 1 entspricht. Die Ausgänge 7 sind jeweils mit Basisduplexern 8,9,10,11 verbunden, die von der Eingangsweiche 4 aus dem Eingangssignal erzeugte Einzeleingangssignale mit jeweils einem der Basisduplexer 8,9,10,11 verbundenen Hochfrequenzteilen 12,13, 14,15 zuführen. Die Hochfrequenzteile 12, 13, 14,15 sind im Bereich von Basisstationen 16,17,18,19 angeordnet, die als Verbindungselemente zu einem Telefonnetz 20 ausgebildet sind. Es ist aber auch möglich, die Hochfrequenzteile 12,13,14,15 getrennt von den Basisstationen 16,17, 18,19 anzuordnen. Die Basisduplexer 8,9,10,11 leiten die Einzeleingangssignale ohne Rückwirkung auf von den Hochfrequenzteilen 12,13,14,15 abgegebene Einzelausgangssignale weiter. Die Einzelausgangssignale werden von den Basisduplexern 8,9,10,11 der Ausgangsweiche 5 zugeführt.

Die Eingangsweiche 4 weist Vorverstärker 21,22,23 und Leistungsteiler 24,25,26 auf. Die Leistungsteiler 24, 25, 26 teilen das Eingangssignal jeweils zu gleichen Teilen auf die zugeordneten Ausgänge auf. Die Leistungsteiler 24,25,26 sind vorteilhafterweise breitbandig ausgebildet, so daß jeweils das gesamte Spektrum der angebotenen Eingangssignale jedem Ausgang zugeführt wird. Die Vorverstärker 21,22,23 gewährleisten trotz der Aufteilung des Eingangssignals durch die Leistungsteiler 24, 25, 26 eine ausreichende Signalamplitude.

Insbesondere ist daran gedacht, jeweils einen der Vorverstärker 21,22,23 und einen der Leistungsteiler 24, 25, 26 in Kaskadenelementen 27,28,29 zusammenzufassen und durch einen kaskadierten Aufbau der Eingangsweiche 4 eine Isolierung der Einzeleingangssignale mit geringem apparativen Aufwand zu ermöglichen. Die Kaskadenelemente 27,28,29 können dabei so kaskadiert werden, daß das dem Antennenduplexer 3 zugewandt angeordnete Kaskadenelement 27 eine Grobaufteilung des Eingangssignals vornimmt und die dem Kaskadenelement 27 nachgeschalteten Kaskadenelement 28,29 für die Feinaufteilung des Eingangssignals zuständig sind. Im Bereich der Ausgänge 7 der Eingangsweiche 4 sind Dämpfungsglieder 30, 31, 32, 33 angeordnet, die die Signalamplituden der von den Leistungsteilern 24,25,26 bereitgestellten Einzeleinangssignale herabsetzen und die Leistungsteiler 24, 25, 26 gegenüber Rückwirkungen schützen, die aus der Verbindung mit den Basisduplexern 8,9,10,11 resultieren könnten.

Die Ausgangsweiche 5 besteht im wesentlichen aus Vorverstärkern 34,35,36,37 und nachgeschalteten Filtern 38,39,40,41, die auch als Isolatoren bezeichnet werden, die die Einzelausgangssignale einem Ausgangskoppler 42 zuführen, der die Einzelausgangssignale zu einem gemeinsamen Ausgangssignal kombiniert und dieses dem Antennenduplexer 3 zur Verfügung stellt. Die Filter 38, 39, 40, 41 sind so ausgebildet, daß sie die Einzelausgangssignale von den Vorverstärkern 34,35,36,37 in Richtung auf den Ausgangskoppler 42 weiterleiten, andererseits aber eine Rückübertragung von Signalen des Ausgangskopplers 42 zu den Hochfrequenzteilen 12, 13, 14, 15 verhindern.

Die Vorverstärker 34,35,36,37, die Filter 38,39,40,41 und der Ausgangskoppler 42 sind so dimensioniert, daß für jedes Einzelausgangssignal eine resultierende Verstärkung von 0 dB resultiert. Der Ausgangskoppler 42 ist aus miteinander verschalteten 3-dB-Kopplern ausgebildet, die in Streifenleitungstechnik auf einem gemeinsamen Substrat mit hoher Dielektrizitätszahl realisiert sind. Der Ausgangskoppler 42 weist eine Entkopplung seiner Eingänge von mindestens 30 dB auf. Durch dieses Konstruktionsprinzip ist es möglich, den Ausgangskoppler auf einer Substratfläche von etwa 5 cm x 5 cm zu realisieren.

Ein von einem Sender 46 eines Handapparates 44 des schnurlosen Telefons 1 ausgestrahltes Signal wird von der Antenne 2 empfangen und einer die wesentlichen Bauelemente der erfindungsgemäßen Vorrichtung zusammenfassenden Antennenweiche 43 zugeführt. Von dem Antennenduplexer 3 wird das Eingangssignal an die Eingangsweiche 4 weitergeleitet und dort entsprechend einem vorgegebenen Aufteilungskriterium den Basisduplexern 8,9,10,11 zugeführt. Über die Ausgangsweiche 4, deren Anzahl von Ausgängen 7 vorzugsweise einer Potenz der Zahl 2 entspricht, ist mit einfachen Mitteln eine besonders kompakte Ausführung realisierbar. Der zugeordnete Basisduplexer 8,9,10,11 leitet das Signal über das ihm zugeordnete Hochfrequenzteil 12,13,14,15 und die entsprechende Basisstation 16,17,18,19 dem Telefonnetz 20 zu, das das Gesprächssignal einem angewählten Gesprächspartner zuführt. Eine Antwort dieses Gesprächspartners wird als Antwortsignal über das Telefonnetz 20, die zugeordnete Basisstation 16,17,18,19 und das entsprechende Hochfrequenzteil 12,13,14,15 der Ausgangsweiche 5 zugeführt und von dieser an den Antennenduplexer 3 weitergeleitet. Nach einer Ausstrahlung dieses Signals von der Antenne 12 gelangt das Antwortsignal über einen Empfänger 45 in den Bereich des Handapparates 44 und wird dort in ein für den Benutzer des Systems verständliches akustisches Signal umgesetzt.

Die Vorrichtung ist für unterschiedliche Übertragungsverfahren geeignet. Insbesondere ist jedoch daran gedacht, die erfindungsgemäße Vorrichtung bei einer Signalübertragung nach dem CT1- bzw. CT1 plus-Standard zu verwenden, bei dem der Handapparat 44 und die Basisstationen 16,17,18,19 nach einem Frequenzmultiplex/Frequenzduplexverfahren arbeiten. Bei der Verwendung dieses Übertragungsverfahrens ist es beispielsweise möglich, aus 40 oder 80 Kanälen im 800 oder 900 MHz-Band automatisch einen freien Kanal für eine Duplexverbindung auszuwählen. Der übliche Duplexabstand beträgt dabei 45 MHz.

Es ist auch möglich, die Basisstationen 16,17,18,19 in einer gemeinsamen Station mit einer Signalselektierung zusammenzufassen. Es ist darüber hinaus möglich, statt der Verwendung der Basisduplexer 8,9,10,11 eine direkte Verbindung der Hochfrequenzteile 12,13,14,15 mit der Eingangsweiche 4 und der Ausgangsweiche 5 vorzusehen und den Eingangs- und Ausgangssignalen jeweils separate Kanäle der Hochfrequenztelle 12,13,14,15 zuzuordnen.

## Patentansprüche

1. Vorrichtung zum gleichzeitigen Betreiben von mindestens zwei schnurlosen Telefonen (1), bei der zugeordnete Basisstationen (16,17,18,19) an eine gemeinsame Antenne angeschlossen sind und eine mit der Antenne (2) verbundene Antennenweiche vorgesehen ist, und bei der im Bereich der Antennenweiche ein ein Empfangssignal von einem Sendesignal trennender Antennenduplexer (3) vorgesehen ist, der Antennenduplexer (3) einerseits mit einer das Empfangssignal in Einzelempfangssignale auftrennenden Eingangsweiche (4) und andererseits mit einer das Sendesignal aus Einzelsendesignalen kombinierenden Ausgangsweiche (5) verbunden ist, die Eingangsweiche (4) und die Ausgangsweiche (5) jeweils mit mindestens einem Hochfrequenzteil (12,13,14,15) verschaltet sind und bei der im Bereich der Eingangsweiche (4) mindestens ein das Eingangssignal verstärkender Vorverstärker (21,22,23) sowie mindestens ein das Eingangssignal in Einzeleingangssignale aufteilender Leistungsteiler (24,25,26) angeordnet ist, dadurch gekennzeichnet, daß eine gleiche Anzahl von Handapparaten (44) einerseits und Basisstationen (16, 17, 18, 19) andererseits vorgesehen ist, daß jedem der Telefone (1) eine Basisstation (16,17,18,19) zugeordnet ist und daß im Bereich der Ausgangsweiche (5) Einzelausgangssignale verstärkende und über Filter (38,39,40,41) einem Ausgangskoppler (42) zuleitende Vorverstärker (34,35,36,37) angeordnet sind und daß zur Signalübertragung ein Frequenzmultiplex/-Frequenzduplexverfahren verwendet ist.

2. Vorrichtung nach Anspruch 1, dadurch gekennzeichnet, daß jeweils ein Vorverstärker (21,22,23) und ein Leistungsteiler (24,25,26) ein das Eingangssignal kaskadenförmig aufteilendes Kaskadenelement (27,28,29) ausbilden.

3. Vorrichtung nach Anspruch 1 oder 2, dadurch gekennzeichnet, daß im Bereich von Ausgängen (7) der Eingangsweiche (4) die Einzeleingangssignale abschwächende Dämpfungsglieder (30,31,32,33) angeordnet sind.

4. Vorrichtung nach einem der Ansprüche 1 bis 3, dadurch gekennzeichnet, daß der Ausgangskoppler (42) in Streifenleitungstechnik ausgebildet ist.

5. Vorrichtung nach einem der Ansprüche 1 bis 4, dadurch gekennzeichnet, daß der Ausgangskoppler mindestens bereichsweise aus 3-dB-Elementen ausgebildet ist, die auf einem gemeinsamen Substrat mit hoher Dielektrizitätszahl angeordnet sind.

6. Vorrichtung nach einem der Ansprüche 1 bis 5 dadurch gekennzeichnet, daß der Ausgangskoppler (42) eine Entkopplung seiner Ausgänge von mindestens 30 dB aufweist.

7. Vorrichtung nach einem der Ansprüche 1 bis 6, dadurch gekennzeichnet, daß die Ausgangsweiche (5) bezüglich jedes ihrer Eingänge eine Verstärkung von 0 dB aufweist.

8. Vorrichtung nach einem der Ansprüche 1 bis 3, dadurch gekennzeichnet, daß die Leistungsteiler (24,25,26) jeweils einen Verstärkungsfaktor von -6 dB aufweisen.

9. Vorrichtung nach Anspruch 2, dadurch gekennzeichnet, daß die Kaskadenelemente (27,28,29) jeweils einen Eingang und zwei Ausgänge aufweisen.

## Claims

1. A device for the simultaneous operation of at least two cordless telephones (1), in which associated base stations (16, 17, 18, 19) are connected to a common antenna, and an antenna multiplexer connected to the antenna (2) is provided, and in which device an antenna duplexer (3) separating a receive signal from a transmit signal is provided in the region of the antenna multiplexer, the antenna duplexer (3) being connected on the one hand to an input filter (4) splitting the receive signal into individual receive signals, and connected on the other hand to an output filter (5) combining individual transmit signals into the transmit signal, the input filter (4) and the output filter (5) each being connected to at least one high-frequency section (12, 13, 14, 15), and in which device at least one preamplifier (21, 22, 23) amplifying the input signal, and at least one power divider (24, 25, 26) splitting the input signal into individual input signals, is arranged in the region of the input filter (4), **characterised in that** an equal number of handsets (44) and base stations (16, 17, 18, 19) is provided on both sides, that a base station (16, 17, 18, 19) is assigned to each telephone (1) and that preamplifiers (34, 35, 36, 37) amplifying individual output signals and feeding them via filters (38, 39, 40, 41) to an output coupler (42), are arranged in the region of the output filter (5), and that a frequency-division-multiplex/frequency-division-duplex method is used for signal transmission.

2. Device according to Claim 1, characterised in that respective preamplifiers (21, 22, 23) and power dividers (24, 25, 26) form a cascade element (27, 28, 29) dividing the input signal in a cascade arrangement.

3. Device according to Claim 1 or 2, characterised in that attenuators (30, 31, 32, 33) attenuating the individual input signals are arranged in the region of outputs (7) of the input filter (4).

4. Device according to one of Claims 1 to 3, characterised in that the output coupler (42) is constructed using the stripline technique.

5. Device according to one of Claims 1 to 4, characterised in that, at least in parts, the output coupler is constructed from 3-dB elements which are arranged on a common substrate having a high dielectric constant.

6. Device according to one of Claims 1 to 5, characterised in that the output coupler (42) has at least 30 dB of decoupling for its outputs.

7. Device according to one of Claims 1 to 6, characterised in that the output filter (5) has a gain of 0 dB with respect to each of its inputs.

8. Device according to one of Claims 1 to 3, characterised in that each of the power dividers (24, 25, 26) has an amplification factor of -6 dB.

9. Device according to Claim 2, characterised in that each of the cascade elements (27, 28, 29) has one input and two outputs.

## Revendications

1. Dispositif destiné à l'utilisation simultanée d'au moins deux téléphones sans fils (1), dont les stations fixes (16, 17, 18, 19) sont raccordées à une antenne commune et un dispositif de partage d'antenne relié à l'antenne (2), qui, au niveau du dispositif de partage d'antenne, est associé à un circuit duplex d'antenne (3) qui sépare un signal de réception d'un signal d'émission, le circuit duplex d'antenne (3) étant d'un côté relié à un dispositif de partage d'antenne (4) qui sépare les signaux individuels reçus contenus dans le signal de réception et de l'autre côté avec un dispositif de combinaison d'antenne (5) des signaux individuels d'émission en signal d'émission unique, le dispositif de partage d'antenne (4) et le dispositif de combinaison d'antenne (5) chacun étant connecté à au moins un étage haute fréquence (12, 13, 14, 15) et auquel sont associés au niveau du dispositif de partage d'antenne (4) au moins un préamplificateur du signal d'entrée (21, 22, 23) et au moins un séparateur de puissance (24, 25, 26) du signal d'entrée en signaux d'entrée individuels, caractérisé en ce qu'il est prévu un nombre égal de combinés portatifs (44) d'une part et de stations fixes (16, 17, 18, 19) d'autre part de sorte que chaque téléphone (1) est associé à une station fixe (16, 17, 18, 19) et qu'au niveau du dispositif de combinaison d'antenne (5) sont prévus des préamplificateurs (34, 35, 36, 37) des signaux individuels de sortie appliqués au coupleur de sortie (42) via les filtres (38, 39, 40, 41) et que la transmission des signaux est réalisée par un processus duplex de fréquences multiplexées.

2. Dispositif selon la revendication 1, caractérisé par l'association par paire d'un préamplificateur (21, 22, 23) et d'un séparateur de puissance (24, 25, 26) formant un élément de cascade (27, 28, 29) de séparation en cascade du signal d'entrée.

3. Dispositif selon les revendications 1 ou 2, caractérisé par des atténuateurs (30, 31, 32, 33) des signaux individuels d'entrée situés au niveau des sorties (7) du dispositif de partage d'entrée (4).

4. Dispositif selon une des revendications 1 à 3, caractérisé par la réalisation du coupleur de sortie (42) selon la technique de déposition des conducteurs.

5. Dispositif selon une des revendications 1 à 4, caractérisé par la réalisation au moins partielle du coupleur de sortie en éléments de 3 dB déposés sur un substrat commun à coefficient diélectrique élevé.

6. Dispositif selon une des revendications 1 à 5, caractérisé par un découplage d'au moins 30 dB des sorties du coupleur de sortie (42).

7. Dispositif selon une des revendications 1 à 6, caractérisé par un gain de 0 dB de chacune des sorties du dispositif de combinaison de sortie (5).

8. Dispositif selon une des revendications 1 à 3, caractérisé par un gain de -6 dB des séparateurs de puissance (24, 25, 26).

9. Dispositif selon la revendication 2, caractérisé par des éléments de cascade (27, 28, 29) à une entrée et deux sorties chacune.
